**Europäisches Patentamt**

**European Patent Office**

**Office européen des brevets**

(19)

(11) Veröffentlichungsnummer: **0 345 722 B1**

(12)

# EUROPÄISCHE PATENTSCHRIFT

(45) Veröffentlichungstag der Patentschrift: **29.09.93**

(51) Int. Cl.5: **B60R 21/00**, G01P 15/08

(21) Anmeldenummer: **89110207.1**

(22) Anmeldetag: **06.06.89**

(54) **Beschleunigungssensor.**

(30) Priorität: **10.06.88 DE 3819759**

(43) Veröffentlichungstag der Anmeldung:
**13.12.89 Patentblatt  89/50**

(45) Bekanntmachung des Hinweises auf die
Patenterteilung:
**29.09.93 Patentblatt  93/39**

(84) Benannte Vertragsstaaten:
**DE FR GB IT SE**

(56) Entgegenhaltungen:
WO-A-85/04627          DE-A- 3 022 878
DE-A- 3 402 387        DE-A- 3 540 947
DE-C- 3 725 758        FR-A- 2 130 681

(73) Patentinhaber: **GEBR. SCHMIDT FABRIK FUR
FEINMECHANIK
Feldbergstrasse 1
D-78112 St Georgen(DE)**

(72) Erfinder: **Sondergeld, Manfred, Dr.
Glasbachweg 18
D-7742 St. Georgen/Schwarzwald(DE)**
Erfinder: **Wissig, Claus
Kirnachweg 12
D-7742 St. Georgen/Schwarzwald(DE)**

(74) Vertreter: **Witte, Alexander, Dr.-Ing. et al
Witte, Weller, Gahlert & Otten Patentanwälte
Augustenstrasse 14
D-70178 Stuttgart (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3. 10 / 3.6 / 3.3. 1)

## Beschreibung

Die Erfindung betrifft einen Beschleunigungssensor mit einem Lichtsender und einem Lichtempfänger, die auf einer optischen Achse einander zu weisend angeordnet sind, mit einem zur Achse rotationssymmetrischen Kippteil, das in einer ersten Arbeitsstellung koaxial zur Achse angeordnet ist und eine zur Achse koaxiale Durchgangsbohrung aufweist, so daß ein Lichtstrahl vom Lichtsender durch die Durchgangsbohrung zum Lichtempfänger gelangt, mit Haltemitteln zum Festhalten des Kippteiles in der ersten Arbeitsstellung mit einer vorgegebenen Kraft auf einer Aufstandsfläche in Richtung der Achse und mit Führungsmitteln, die bei einer auf das Kippteil einwirkenden Beschleunigung in einer Richtung senkrecht zur Achse unter Überwindung der vorgegebenen Kraft eine begrenzte Kippbewegung des Kippteiles um einen im Abstand von der Achse angeordneten Drehpunkt in eine zweite Arbeitsstellung ermöglichen, derart, daß die Durchgangsbohrung aus der Bahn des Lichtstrahles weggekippt wird, wobei das Kippteil in seiner räumlichen Masseverteilung derart ausgebildet und damit sein Schwerpunkt relativ zum Drehpunkt derart positioniert ist, daß das Verhältnis der zum Abheben des Kippteiles in Richtung der Achse erforderlichen Abrißbeschleunigung zu der zum Kippen des Kippteiles um den Drehpunkt erforderlichen Kippbeschleunigung größer als eins ist, und wobei das Kippteil mit einem radial vorspringenden Kragen versehen ist, dessen umlaufender Rand der Ort des Drehpunktes ist.

Ein Beschleunigungssensor der vorstehend genannten Art ist aus der DE-OS 35 40 947 bekannt.

Beschleunigungssensoren der hier interessierenden Art werden z.B. in Kraftfahrzeugen eingesetzt, um das Überschreiten von vorgegebenen Beschleunigungs-Grenzwerten zu erkennen und in Form elektrischer Signale zu melden. Dies ist vor allem für Insassen-Sicherungssysteme in Kraftfahrzeugen von Interesse, bei denen eine Sicherheitsfunktion ausgelöst wird, wenn das Kraftfahrzeug auf ein Hindernis aufprallt oder infolge einer Gefahrenursache ungewöhnliche Fahrbewegungen ausführt, die von der normalen Fahrtrichtung abweichen. Die Sicherheitsfunktion kann z.B. darin bestehen, daß die Warnblinkanlage eingeschaltet wird, daß die Fahrzeugtüren zentral entriegelt werden, daß ein Überrollbügel ausgefahren oder die Kraftstoffzufuhr unterbrochen wird. Sensoren, die für derartige Zwecke eingesetzt werden sollen, brauchen daher lediglich das Überschreiten eines bestimmten Beschleunigungs-Grenzwertes zu erkennen, dies soll jedoch mit einer Rundumcharakteristik für alle Beschleunigungen möglich sein, die in einer zur Fahrbahn parallelen Ebene liegen bzw. dort eine merkliche vektorielle Komponente aufweisen.

Es ist bekannt, zu diesem Zweck Beschleunigungssensoren einzusetzen, bei denen eine seismische Masse in einem Meßsystem mit einer Haltekraft festgehalten wird. Die Haltekraft einerseits und die seismische Masse andererseits sind so dimensioniert, daß bei Erreichen des vorbestimmten Beschleunigungs-Grenzwertes die von der seismischen Masse ausgeübte Trägheitskraft die Haltekraft überschreitet. Die seismische Masse kann dann einen bestimmten Weg durchmessen und auf diesem Weg ein elektrisches Signal auslösen, das dann wiederum zum Aktivieren des Sicherungssystemes herangezogen wird. Es ist dabei bekannt, das vom Sensor erzeugte Signal in einer Aufbereitungsschaltung zu verarbeiten, um beispielsweise kurzzeitig auftretende Störsignale zu unterdrücken.

Aus der DE-PS 30 22 878 ist ein Beschleunigungs-Grenzwertschalter bekannt, bei dem ein kugelförmiger Trägheitskörper aus ferromagnetischem Material von einem Dauermagneten in einer Ruhestellung gehalten wird. Der kugelförmige Trägheitskörper befindet sich in einem Hohlraum eines Sensors und wird so lange durch die Haltekraft des Dauermagneten in seiner Ruhestellung gehalten, wie der vorgegebene Beschleunigungsgrenzwert nicht überschritten wird.

Der Dauermagnet ist bei dem bekannten Sensor in einem ferromagnetischen rohrförmigen Rückschlußtopf gehalten, der mit seiner oberen freien Öffnung den kugelförmigen Trägheitskörper hält. Die obere Begrenzungsfläche des Hohlraumes, in dem sich der Trägheitskörper befindet, wird von einer Membran gebildet, die an ihrer vom Hohlraum abgewandten Seite ein Schaltelement trägt.

Wird nun der bekannte Beschleunigungssensor einer Beschleunigung ausgesetzt, die höher ist als der vorgegebene Grenzwert, so wird der kugelförmige Trägheitskörper unter Überwindung der Haltekraft des Dauermagneten vom rohrförmigen Rückschlußtopf abgehoben und rollt in unkontrollierter Weise, entlang einer Führungswand, die den Hohlraum seitlich umschließt, nach oben. Wenn die auf den Trägheitskörper einwirkende Beschleunigung groß genug ist, schlägt der Trägheitskörper auf seiner Abrollbahn gegen die gegenüberliegende Membran, die bei ausreichend hoher Beschleunigung ausgelenkt wird und das Schaltelement betätigt.

Der bekannte Beschleunigungssensor hat damit zwar eine ausgeprägte Rundumcharakteristik, wie dies für den hier interessierenden Anwendungsfall gewünscht wird, ihm sind jedoch andererseits mehrere Nachteile zu eigen.

Nachteilig bei dem bekannten Beschleunigungssensor ist vor allem, daß die Bahnbewegung des kugelförmigen Trägheitskörpers undefiniert ist. So können durch zufällige Störungen des Beschleunigungsverlaufes Abweichungen von der gewollten kürzesten Bahnstrecke auftreten, mit der Folge, daß der kugelförmige Trägheitskörper infolge eines ihm aufgeprägten Dralles z.B. auch eine spiralförmige Bahn beschreiben kann. Dies führt zu einer unerwünschten Veränderung der Schaltschwelle, weil bei der Bauweise des bekannten Beschleunigungssensors kein eindeutiges Kriterium für den Beschleunigungs-Grenzwert definiert werden kann, bei dem das Schaltelement gerade (noch) ausgelöst wird. Um daher bei dem bekannten Beschleunigungssensor zu verhindern, daß gefährliche Zustände nicht erkannt werden, muß man die Schaltschwelle so weit herabsetzen, daß der Sensor in jedem Falle noch anspricht. Dies führt aber andererseits zu unerwünschten Fehlmeldungen, weil bei besonders ungünstigem Beschleunigungsverlauf auch niedrige Beschleunigungswerte, die keinen kritischen Zustand anzeigen, bereits zu einer Auslösung führen können.

Nachteilig bei dem bekannten Beschleunigungssensor ist ferner, daß auch vertikale Beschleunigungskräfte zu einer Auslösung führen können. Diese sogenannte Z-Empfindlichkeit ist jedoch bei Insassen-Sicherungssystemen von Kraftfahrzeugen besonders störend, weil beträchtliche Beschleunigungswerte in Vertikalrichtung erfahrungsgemäß auch dann auftreten können, wenn lediglich z.B. die Motorhaube oder der Kofferraumdeckel fest zugeschlagen werden oder wenn das Kraftfahrzeug mit hoher Geschwindigkeit eine Unebenheit, beispielsweise ein Schlagloch, eine Bodenwelle oder einen Bordstein überfährt.

Weiterhin ist bei dem bekannten Beschleunigungssensor von Nachteil, daß der Schaltkontakt elektromechanisch ausgebildet ist, so daß die Langzeit-Tauglichkeit unter den rauhen Bedingungen an Bord eines Kraftfahrzeuges nicht in jedem Falle gewährleistet werden kann.

Schließlich bringt es der elektromechanische Aufbau des bekannten Sensors mit sich, daß der auslösende kugelförmige Trägheitskörper Prellvorgänge im Schaltkontakt auslösen kann.

Entsprechendes gilt auch dann, wenn der vorstehend erläuterte bekannte Beschleunigungssensor so weitergebildet wird, wie dies in der DE-PS 34 02 387 beschrieben ist. Bei dieser Weiterbildung sind die mechanischen Kontakte noch um eine Lichtschranke ergänzt, die durch eine horizontal verlaufende Bohrung gebildet wird, welche den Sitz der Kugel schneidet. Wenn die Kugel unten auf ihrem Sitz aufsitzt, ist die Lichtschranke gesperrt, während sie bei abgehobener Kugel freigegeben ist. Ferner sind bei dieser Weiterbildung des bekannten Beschleunigungssensors in dem im wesentlichen kegelförmigen Austrittsraum für die Kugel entlang von Mantellinien verlaufende Rippen vorgesehen, die eine Kreiselbewegung der Kugel auf der kegelförmigen Oberfläche des Raumes verhindern sollen.

Obwohl durch diese Maßnahmen eine größere Reproduzierbarkeit erzielt werden kann, ist die Ausführungsform nach DE-PS 34 02 387 nicht mehr omnidirektional, weil die erwähnten Rippen eine Kugelbewegung im wesentlichen nur noch in vier aufeinander senkrecht stehenden Radialrichtungen zulassen. Außerdem können die vorgesehenen Rippen dazu führen, daß die Kugel unterhalb des unteren Endes der Rippe in eine oszillierende Bewegung versetzt wird, wenn sie zwischen den unteren Endpunkten der Rippen hin- und hergeschleudert wird.

Bildet man demgegenüber einen Beschleunigungssensor in der Weise aus, wie dies in der eingangs genannten DE-OS 35 40 947 beschrieben wurde, so lassen sich zahlreiche Nachteile des vorstehend beschriebenen Standes der Technik vermeiden. So hat der dort beschriebene Beschleunigungssensor den Vorteil, daß durch die Führungsmittel nur eine definierte Kippbewegung des Kippteiles möglich ist und zwar im wesentlichen nur in einer Ebene senkrecht zur Hauptachse, die mit der Vertikalachse des Kraftfahrzeuges zusammenfällt, so daß der Grenzwert der horizontal gerichteten Beschleunigung, bei dem der Sensor ansprechen soll, präzise definiert werden kann.

Die Verwendung einer Lichtschranke mit Lichtsender, Lichtempfänger und einem schaltbaren Transmissionselement in Gestalt der Durchgangsbohrung hat darüberhinaus auch hier den Vorteil, daß jedwede elektromechanischen Schaltelemente entbehrlich sind und somit der eingangs genannte Beschleunigungssensor auch im Langzeitgebrauch an Bord eines Kraftfahrzeuges funktionsfähig bleibt.

Gleichwohl hat auch dieser eingangs genannte Beschleunigungssensor Nachteile, weil auch er noch über eine ausgeprägte Z-Empfindlichkeit verfügt. Infolge der gewünschten Kippbewegung des Kippteiles muß nämlich das Kippteil in der Vertikalachse mit einem gewissen Spiel angeordnet sein, weil sonst eine Kippbewegung nicht ausgeführt werden könnte. Dies bedeutet jedoch andererseits, daß das Kippteil bei starken Beschleunigungswerten in Vertikalrichtung die ebenfalls in Vertikalrichtung wirkende Haftkraft zumindest kurzfristig überwinden kann und in diesem Augenblick bereits geringe Werte einer horizontal gerichteten Beschleunigung ausreichen, um das Kippteil in die zweite Arbeitsstellung zu bringen. Diese Gefahr ist in der Praxis auch durchaus bedeutsam, weil bei realen Beschleunigungsvorgängen, wie sie in der Fahrpraxis eines Kraftfahrzeuges auftreten, stets Beschleunigungen mit vektoriellen Komponenten in allen Raumrichtungen auftreten, beispielsweise dann, wenn ein Kraftfahrzeug gegen einen Bordstein fährt und dadurch gleichzeitig in horizontaler Richtung abgebremst und in vertikaler Richtung zeitweise nach unten beschleunigt wird.

Bei diesem aus der DE-OS 35 40 947 bekannten Beschleunigungssensor ist vorgesehen, die Schwerpunktslage so einzustellen, daß die Kippbeschleunigung zwischen 0,4 g und 4 g variiert werden kann, d.h., daß das Verhältnis der Abrißbeschleunigung in z-Richtung, nämlich 1 g, zur Kippbeschleunigung zwischen 2,5 und 0,25 liegen kann. Allerdings ist der Bereich des Beschleunigungsverhältnisses begrenzt, weil bei dem bekannten Beschleunigungssensor in z-Richtung nur die Schwerkraft wirkt, die Abrißbeschleunigung also stets gleich 1 g ist.

Wird der bekannte Beschleunigungssensor der DE-OS 35 40 947 in einem Kraftfahrzeug eingesetzt, wobei dann die Achse des Beschleunigungssensors mit der Vertikalen zusammenfällt, so hat die Lage des Schwerpunktes des Kippteiles auf der Achse keinen Einfluß auf den Beschleunigungswert in Richtung der Achse, der zum Abheben des Kippteiles ebenfalls in Richtung der Achse erforderlich ist. Andererseits hat die Lage des Schwerpunktes auf der Achse jedoch einen wesentlichen Einfluß auf das Kippmoment, das zum Kippen des Kippteiles erforderlich ist, weil die Lage des Schwerpunktes auf der Achse den Hebelarm definiert, um den die seismische Masse des Kippteiles relativ zum Drehpunkt wirkt. Legt man also den Schwerpunkt des Kippteiles relativ hoch, so kann ein gewünschtes Kippmoment bereits mit einer geringeren Masse des Kippteiles erreicht werden. Dies führt andererseits zu einer Erhöhung der Abrißbeschleunigung, weil bei verringerter Masse die Beschleunigung größer werden muß, um eine konstant gebliebene Haltekraft zu überwinden. Alternativ oder zusätzlich kann aber auch in vorteilhafter Weise die Haltekraft erhöht werden, ohne daß dies den Wert des Kippmomentes beeinflußt. Insgesamt bedeutet dies also, daß unter Konstanthaltung des Kippmomentes die Abrißbeschleunigung in Vertikalrichtung erheblich erhöht werden kann, so daß die oben geschilderten Fehlauslösungen durch Verkippen des abgehobenen Kippteiles mit hoher Sicherheit ausgeschlossen werden können.

Nachteilig bei dem aus der DE-OS 35 40 947 bekannten Beschleunigungssensor ist ferner, daß das Kippverhalten im Auslösezeitpunkt nicht hinreichend definiert ist. Das Kippteil steht nämlich auf der Aufstandsfläche mit einer schmalen Kreisringfläche auf, die an ihrem Umfang gehalten ist, und zwar mittels eines Einsetzteils, das den Umfang des Kippteiles unten dicht umschließt und sich nach oben konisch öffnet, so daß das Kippteil in dieser konischen Öffnung seitlich wegkippen kann.

Dies bedeutet andererseits, daß das Kippteil im Ansprechzeitpunkt nur punktförmig auf der Aufstandsfläche aufsteht, nämlich genau in dem Punkt, um den das Kippteil an seiner äußeren Peripherie gekippt wird und der sich in der Ebene der Aufstandsfläche befindet. Dies hat den Nachteil, daß bei realen Bedingungen, in denen Beschleunigungskomponenten unter verschiedenen Koordinatenrichtungen auf den Sensor einwirken, das Kippteil ins Trudeln kommen, d.h. aus der primären Kipprichtung zusätzlich noch seitlich wegkippen kann. Es liegt auf der Hand, daß dies einem definierten Ansprechverhalten des Kippteiles abträglich ist.

Aus der prioritätsälteren, jedoch nicht vorveröffentlichten DE-PS 37 25 758 ist schließlich bekannt, einen Beschleunigungssensor der eingangs genannten Art so auszubilden, daß zwischen der Aufstandsfläche und der Unterseite des Kippteiles ein sich radial nach außen öffnender Ringspalt und außerdem eine magnetische Halterung vorgesehen ist. Auf diese Weise soll ein "Schnappeffekt" erzielt werden, wenn das Kippteil seitlich wegkippt. Dann schließt sich nämlich der Ringspalt auf der einen Seite und öffnet sich auf der gegenüberliegenden Seite, wobei aufgrund der physikalischen Gesetzmäßigkeiten die Anziehungskraft im Bereich des sich schließenden Ringspaltes in höherem Maße zunimmt als sie im Bereiche des sich öffnenden Ringspaltes abnimmt.

Allerdings ist auch bei diesem Beschleunigungssensor das Kippverhalten im Ansprechzeitpunkt nicht hinreichend definiert, weil das Kippteil zunächst ebenfalls nur punktförmig auf der Aufstandsfläche aufsteht, nämlich in einem Punkt an der Peripherie im Übergang von einem zentralen, ebenen Aufstandsbereich zu dem sich radial öffnenden Ringspalt.

Der Erfindung liegt daher die Aufgabe zugrunde, einen Sensor der eingangs genannten Art dahingehend weiterzubilden, daß seine Z-Empfindlichkeit noch weiter vermindert und ein genau definiertes Schaltverhalten und damit ein sicheres und zuverlässiges Auslösen des Sensors erreicht wird, so daß Fehlauslösungen noch weiter reduziert werden können.

Diese Aufgabe wird erfindungsgemäß dadurch gelöst, daß der umlaufende Rand des radial vorspringenden Kragens einen vertikalen Abstand von der Aufstandsfläche hat, und daß das Kippteil aus einem ferromagnetischen Material besteht und die Haltemittel einen Magneten mit axialer Magnetisierung aufweisen, auf dem das Kippteil in der ersten Arbeitsstellung aufsitzt.

Diese Maßnahmen haben den Vorteil, daß zunächst das Kippverhalten im Auslösezeitpunkt weit besser definiert ist, weil das Kippteil sich um einen Drehpunkt dreht, der vertikal oberhalb der Aufstandsfläche angeordnet ist. Das Kippmoment berechnet sich dabei nämlich ausschließlich aus dem Vertikalabstand des Schwerpunktes vom Drehpunkt, der bei einer horizontal wirkenden Beschleunigung nämlich der Anlagepunkt des Kippteiles ist und daher für den Beginn der Kippbewegung verantwortlich ist. Wenn dann die Kippbewegung einsetzt, wird das Kippteil an zwei Punkten geführt, nämlich zum einen an dem bereits erwähnten Drehpunkt, der nun nach unten an der umgebenden Wandung des Gehäuses herunterrutscht, während andererseits ein peripherer Punkt der Aufstandsfläche des Kippteiles radial nach innen rutscht. Diese Führung des kippenden Kippteiles an zwei in einer Vertikalebene liegenden Punkten hat den Vorteil, daß das Kippteil nur in dieser Vertikalebene kippen und nicht seitlich wegrutschen kann.

Weiterhin hat die an sich bekannte Maßnahme der magnetischen Halterung den Vorteil, daß die vertikale Haltekraft in weiten Grenzen eingestellt werden kann, so daß die Abrißbeschleunigung in z-Richtung nicht durch die natürliche Schwerkraft begrenzt ist.

Bei einer bevorzugten Ausgestaltung des erfindungsgemäßen Beschleunigungssensors, bei dem das Kippteil mit einem näherungsweise zylindrischen Kopf versehen ist, der unten in den radial vorspringenden Kragen übergeht, und bei dem ferner an der Unterseite des Kippteile eine Eindrehung vorgesehen ist, ist bevorzugt vorgesehen, daß der Kopf unterhalb des Schwerpunktes verjüngt ausgebildet ist.

Diese Maßnahme hat den Vorteil, daß die gewünschte Erhöhung des Schwerpunktes in seiner Lage relativ zum Drehpunkt dadurch bewirkt werden kann, daß die Eindrehung bis weit nach oben in das Kippteil hinein ausgebildet wird. Die Dimensionierung der Eindrehung derart, daß sie sich bis zur axialen Position des Schwerpunktes selbst hin erstreckt, hat den Vorteil, daß dies ein Optimum der Schwerpunktslage bei begrenzter Bauhöhe des Kippteiles ist. Wird nämlich die Eindrehung zu weit nach oben fortgesetzt, wird die Masse des Kippteiles oberhalb der Eindrehung immer geringer und zwar im Verhältnis zur Masse am Fuß des Kippteiles und an den Begrenzungswänden der Eindrehung, so daß schlußendlich bei weiterer Vergrößerung der Eindrehung nach oben die Schwerpunktslage wieder umkehrt und der Schwerpunkt sich nach unten absenkt. Hier wird durch die vorgeschlagenen Maßnahmen ein Optimum verwirklicht.

Bei einer weiteren bevorzugten Ausgestaltung der vorstehend beschriebenen Ausführungsbeispiele ist der Kragen mit einer umlaufenden Aushöhlung versehen.

Auch diese Maßnahme hat den Vorteil, daß der Masseanteil am Fuß des Kippteiles weiter vermindert wird, um auf diese Weise die Schwerpunktslage in Achsrichtung weiter zu erhöhen.

Ferner ist besonders bevorzugt, wenn zwischen Kippteil und Magnet eine unmagnetische Unterlegscheibe vorgegebener Dicke angeordnet ist.

Diese Maßnahme hat den Vorteil, daß zum einen durch das Vorsehen der Unterlegscheibe eine ebene Auflagefläche für den Fuß des Kippteiles erzeugt werden kann. Übliche Magnete der hier interessierenden Art, insbesondere Ferrite, haben nämlich die Eigenschaft, daß ihre Oberfläche verhältnismäßig rauh ist, so daß das Haftverhalten des Kippteiles an dem Magneten nicht genau reproduzierbar eingestellt werden kann, weil dieses Haftverhalten von der exakten Position abhängt, an der das Kippteil auf der nicht-ebenen Oberfläche z.B. des Ferrites aufsitzt.

Das Vorsehen einer unmagnetischen Unterlegscheibe zwischen Kippteil und Magnet hat jedoch noch den weiteren Vorteil, daß die Abhängigkeit der Haftkraft von der Dicke der Unterlegscheibe um so unkritischer wird, je dicker die Unterlegscheibe ist. Zwar wird auf diese Weise auch die Haftkraft in ihrem Absolutbetrag vermindert, dies läßt sich jedoch bei den hier interessierenden Größen der Magnete problemlos durch entsprechende Auswahl des Magneten kompensieren. Ein verhältnismäßig größer Luftspalt, der durch die unmagnetische Unterlegscheibe gebildet wird, hat aus den genannten Gründen jedoch den Vorteil, daß Fertigungsschwankungen bei der Dicke der Unterlegscheibe unkritisch sind.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1    eine schematisierte Querschnittsdarstellung durch ein Ausführungsbeispiel eines erfindungsgemäßen Beschleunigungssensors, bei dem sich das Kippteil in einer ersten Arbeitsstellung, nämlich der Ruhestellung, befindet;

Fig. 2    eine Darstellung ähnlich Fig. 1, jedoch mit einem Kippteil, das sich in einer zweiten Arbeitsstellung befindet, das einer Überschreitung eines vorgegebenen Beschleunigungs-Grenzwertes in einer Horizontalebene entspricht;

Fig. 3    eine perspektivische Darstellung eines Kippteiles zur Erläuterung der Wirkungsweise des erfindungsgemäßen Beschleunigungssensors;

Fig. 4    einen Vertikalschnitt durch ein Kippteil;

Fig. 5 bis 9    Vertikalschnitte durch fünf Ausführungsbeispiele von erfindungsgemäßen Kippteilen;

Fig. 10 ein Diagramm zur Erläuterung der Abhängigkeit der Haftkraft von der Luftspaltbreite bei einem erfindungsgemäßen Beschleunigungssensor.

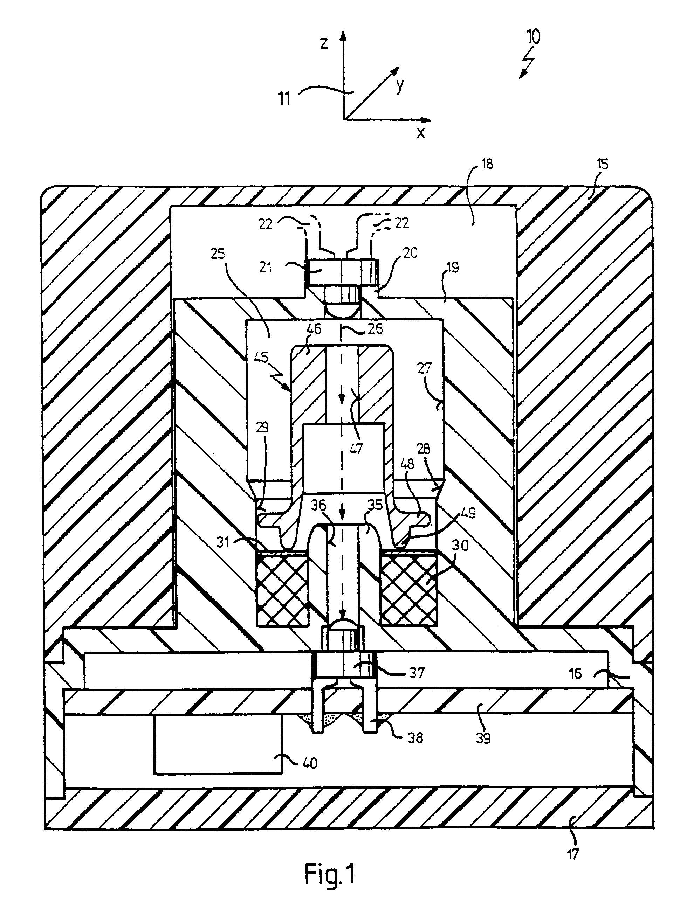

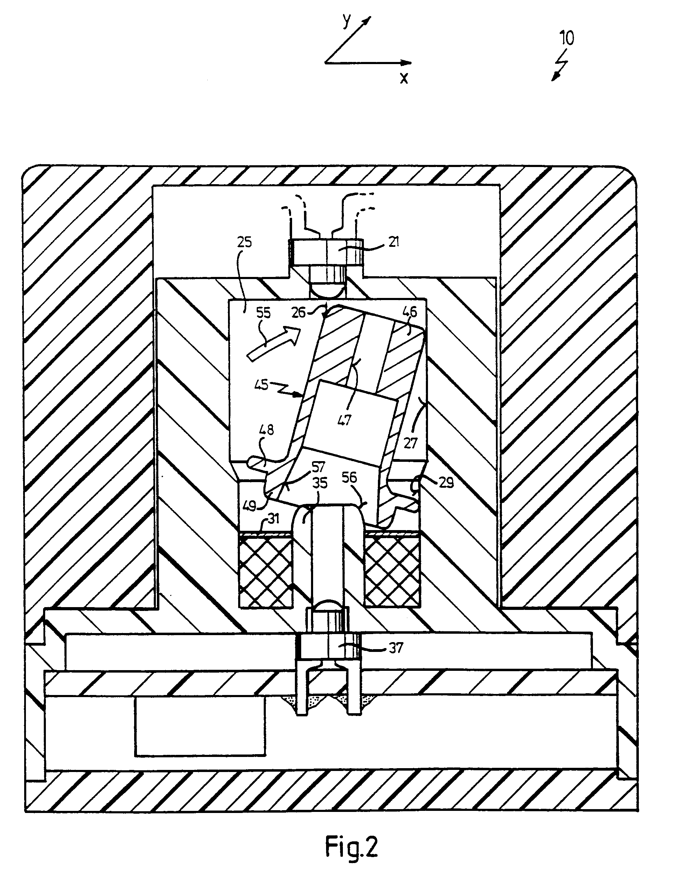

In den Fig. 1 und 2 bezeichnet 10 insgesamt einen Beschleunigungssensor, wie er für passive Insassen-Sicherungssysteme in Kraftfahrzeugen Verwendung findet. Ein Koordinatensystem 11 beschreibt die Einbaulage des Beschleunigungssensors 10. So ist der Beschleunigungssensor 10 mit seiner Hauptachse in Richtung der z-Achse des Koordinatensystems 11 angeordnet, die der Vertikalen entspricht. Der Beschleunigungssensor 10 soll dazu dienen, um Beschleunigungs-Grenzwerte zu erkennen und zu melden, deren wesentliche Komponente in der Horizontalebene, d.h. in der x/y-Ebene des Koordinatensystems 11 liegen.

Der Beschleunigungssensor 10 weist eine Kappe 15, ein Halteteil 16 sowie einen Boden 17 auf, wobei diese Bauteile vorzugsweise aus gespritztem Kunststoff bestehen und in axialer Richtung ineinander gesteckt und aneinander befestigt werden können.

Die Kappe 15 umschließt einen ersten Hohlraum 18, in den ein erster zylindrischer Fortsatz 19 des Halteteils 16 in z-Richtung hineinragt. An seiner Oberseite weist der erste zylindrische Fortsatz 19 eine zentrische Halterung 20 für einen Lichtsender, vorzugsweise eine lichtemittierende Diode (LED) 21 auf. Die lichtemittierende Diode 21 ist mit Anschlüssen 22 versehen, wie dies an sich bekannt ist. Die lichtemittierende Diode 21 ist so positioniert, daß sie mit ihrer lichtaussendenden Seite vertikal nach unten in einen zweiten Hohlraum 25 gerichtet ist, der vom ersten zylindrischen Fortsatz 19 eingeschlossen wird. Die lichtemittierende Diode 21 sendet in z-Richtung einen Lichtstrahl 26 aus.

Der zweite Hohlraum 25 ist im oberen Bereich mit einer ersten zylindrischen Wand 27 versehen, an die sich unten eine konische Wand 28 anschließt, die unten wiederum in eine zweite zylindrische Wand 29 geringeren Durchmessers übergeht. Die zweite zylindrische Wand 29 bildet die Wandfläche einer Sackbohrung, in die ein torusförmiger Permanentmagnet 30 eingesetzt ist. Der Permanentmagnet 30 ist in Richtung der z-Achse magnetisiert und an seiner Oberseite mit einer Unterlegscheibe 31 vorgegebener Dicke abgedeckt.

Durch die zentrale Öffnung des torusförmigen Permanentmagneten 30 hindurch erstreckt sich ein zweiter zylindrischer Fortsatz 35 des Halteteils 16. Der zweite zylindrische Fortsatz 35 ist mit einer axialen Bohrung 36 versehen. An der Unterseite des Halteteils 16 ist ein fotoempfindliches Element 37, beispielsweise ein Fototransistor oder eine Fotodiode angeordnet. Anschlüsse 38 des fotoempfindlichen Elementes 37 sind zu einer Leiterplatte 39 geführt, die von unten in das Halteteil 16 eingesetzt ist. Die Leiterplatte 39 trägt weitere elektronische Bauelemente 40, beispielsweise Versorgungs-, Verstärker- oder Auswerteeinheiten für die lichtemittierende Diode 21 sowie das fotoempfindliche Element 37, und die von diesem erzeugten Signale.

Auf der Unterlegscheibe 31 steht im zweiten Hohlraum 25 ein Kippkegel aus ferromagnetischem Material, der rotationssymmetrisch ausgebildet und insgesamt mit 45 bezeichnet ist.

Der Kippkegel 45 weist im oberen Bereich einen massiven Kopf 46 auf, der lediglich von einer zentralen Bohrung 47 durchsetzt ist. Nach unten geht der Kippkegel 45 in einen umlaufenden Kragen 48 und unterhalb des Kragens 48 in einen umlaufenden Fuß 49 über.

Der Durchmesser des Kragens 48 ist an den Innendurchmesser der zweiten zylindrischen Wand 29 angepaßt, so daß sich der Kippkegel 45 nur mit geringfügigem Spiel in der Horizontalebene bewegen kann.

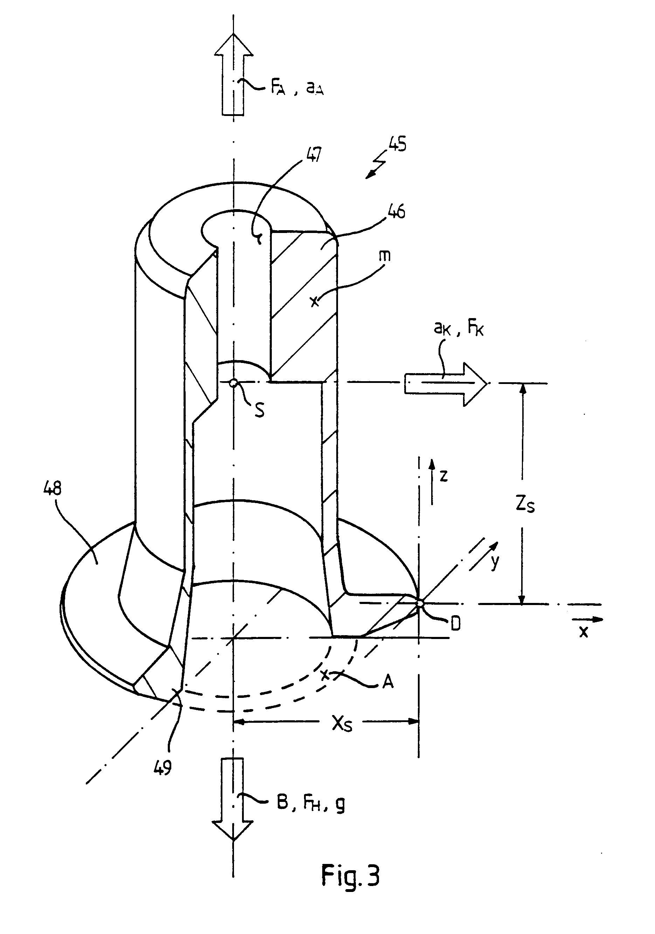

Aufgrund der Wirkung des Permanentmagneten 30 wird der Kippkegel 45 mit einer in z-Richtung nach unten wirkenden Haftkraft auf der Unterlegscheibe 31 festgehalten, wie dies weiter unten zu Fig. 3 noch im einzelnen erläutert werden wird. Aufgrund der Zentrierung des Kippkegels 45 über den Kragen 48 in der zweiten zylindrischen Wand 29 ist dieser koaxial zur z-Achse ausgerichtet. Der von der lichtemittierenden Diode 21 ausgehende Lichtstrahl 26 verläuft infolgedessen durch die Bohrungen 47 und 36 hindurch und fällt auf das fotoempfindliche Element 37. Mit Hilfe der elektronischen Bauelemente 40 wird das positive Ausgangssignal des fotoempfindlichen Elementes 37 als Ruhezustand bzw. als erste Arbeitsstellung des Kippkegels 45 erkannt.

Wirkt nun jedoch auf den Beschleunigungssensor 10 eine Beschleunigung, die eine wesentliche Komponente in der x/y-Ebene des Koordinatensystems 11 aufweist, so wirkt diese horizontal gerichtete Beschleunigung auf den Kippkegel 45 ein, dessen Schwerpunkt aufgrund des massiven Kopfes 46 relativ hoch über der Unterlegscheibe 31 liegt. Bei Überschreiten eines bestimmten Beschleunigungs-Grenzwertes kippt der Kippkegel 45 seitlich weg, weil nun das auf ihn wirkende Kippmoment die vom Permanentmagnet 30 ausgeübte Haftkraft überwindet. Der Drehpunkt für diese Kippbewegung ist dabei der umlaufende Rand des Kragens 48.

In Fig. 2 ist diese Kippbewegung dargestellt, wobei angenommen wurde, daß die Beschleunigung in x-Richtung ihren Maximalwert aufweist. Mit einem Pfeil 55 ist die Kippbewegung des Kegels 45 angedeutet.

Die Kippbewegung des Kippkegels 45 verläuft geführt, weil der Kragen 48 des Kippkegels 45 sich in Fig. 2 mit einem Drehpunkt am rechten umlaufenden Rand an der zweiten zylindrischen Wand 29 des zweiten Hohlraumes 25 abstützt.

Eine weitere Verbesserung der Führung des Kippkegels 45 während der Kippbewegung läßt sich dadurch erreichen, daß man die Außenseite des zweiten zylindrischen Fortsatzes 35 sowie die Innenseite des Fußes 49 des Kippkegels 45 jeweils mit Formgebungen 56, 57 versieht, die zueinander komplementär sind, so daß der Kippkegel 45 mit seinem Fuß 49 nach Art einer Kulissenführung auf dem zweiten zylindrischen Fortsatz 35 während der Kippbewegung geführt wird.

Fig. 3 zeigt in perspektivischer Darstellung den Kippkegel 45, teilweise aufgeschnitten, zur Erläuterung der sich im Betrieb einstellenden physikalischen Wirkungen.

Es wurde bereits erläutert, daß der Kippkegel 45 sich während seiner Kippbewegung um einen Drehpunkt D dreht, der sich am äußeren Rand des Kragens 48 befindet. Man kann nun in diesen Drehpunkt D das Koordinatensystem x/y/z legen und die Koordinaten des Schwerpunktes S des Kippkegels 45 mit $x_s$ und $z_s$ bestimmen. Sitzt der Kippkegel 45 aus ferromagnetischem Material auf dem Permanentmagneten 30, dessen Flußdichte mit B bezeichnet wird und bezeichnet man die Auflagefläche des Fußes 59 mit A, so gilt folgendes:
Die Haftkraft $F_H$ mit der der Kippkegel 45 auf dem Permanentmagneten 30 festgehalten wird, genügt der Beziehung:

$$F_H = AB^2 const$$

Berücksichtigt man ferner die auf den Kippkegel 45 mit der Masse m einwirkende Erdbeschleunigung g, so gilt für die Abrißkraft $F_A$, die aufgewendet werden muß, um den Kippkegel 45 in z-Richtung nach oben vom Permanentmagneten 30 abzuheben

$$F_A = F_H + mg = ma_A$$

wobei $a_A$ die Abrißbeschleunigung ist.

Für die Kippkraft $F_K$, die aufgewendet werden muß, um den Kippkegel 45 seitlich zu verkippen, gilt

$$F_K = ma_K$$

wobei $a_K$ die Kippbeschleunigung, d.h. der im vorliegenden Zusammenhang interessierende Grenzwert der Horizontalbeschleunigung ist.

Für das Kippmoment $M_K$ gilt dann

$$M_K = F_K z_S$$

und für das Abrißmoment $M_A$ gilt entsprechend

$$M_A = (F_H + mg) x_S,$$

wobei das Kippmoment $M_K$ und das Abrißmoment $M_A$ jeweils auf den Drehpunkt D bezogen sind.

Die Kippbedingung ist erfüllt, wenn gilt

$$M_K = M_A$$

woraus wiederum folgt

$$a_A/a_K = z_S/x_S.$$

Der Quotient von Abrißbeschleunigung $a_A$ und Kippbeschleunigung $a_K$ entspricht somit dem Quotienten der Koordinaten $z_S$ und $x_S$ des Schwerpunktes S relativ zum Drehpunkt D. Dies bedeutet mit anderen Worten, daß bei konstruktiv vorgegebenem Durchmesser des Kippkegels und damit konstantem $x_S$ und bei ebenfalls vorgegebenem Beschleunigungs-Grenzwert in der Horizontalebene, d.h. bei konstantem $a_K$ die Abrißbeschleunigung $a_A$ in der gewünschten Weise umso größer wird, je größer $z_S$ wird, d.h. je höher der Schwerpunkt S liegt.

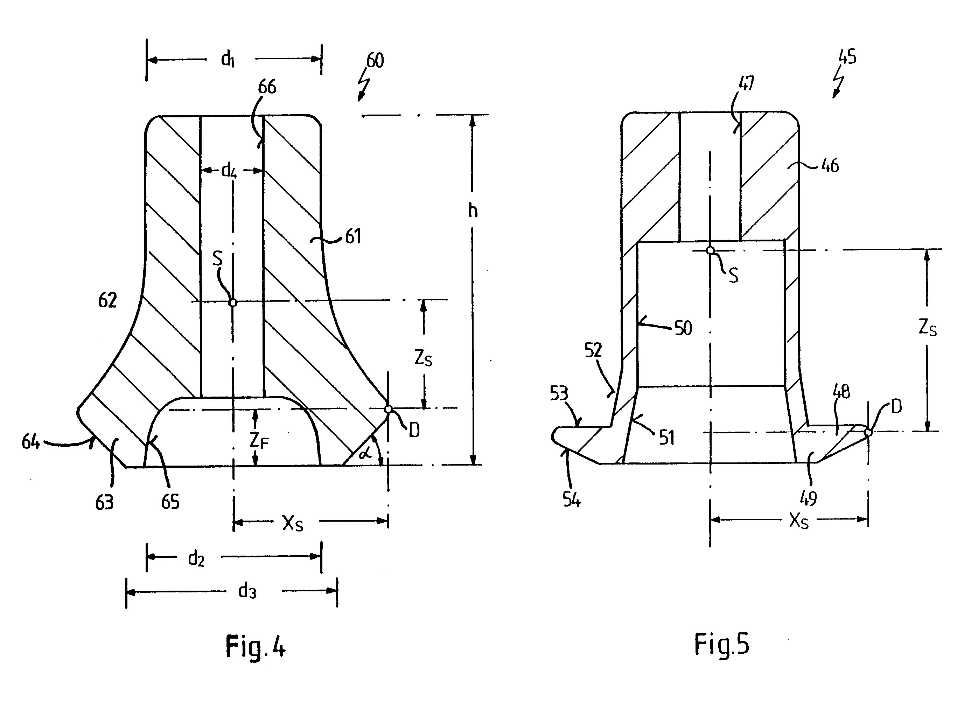

Fig. 4 zeigt einen Kippkegel 60, dessen Kopf im wesentlichen aus einem durchgehenden zylindrischen Abschnitt 61 besteht, der nach unten in ein Rotationshyperboloid 62 übergeht. Ein Fuß 63 wird durch eine zum Rotationshyperboloid 62 gegenläufige konische Fläche 64 gebildet. Von der Unterseite des Kippkegels 60 her ist eine abgerundete Eindrehung 65 vorgesehen. Der Kippkegel 60 ist über seine gesamte axiale Höhe h mit einer durchgehenden Bohrung 66 versehen.

Bei einem praktischen Ausführungsbeispiel eines Kippkegels 60 beträgt die axiale Höhe h etwa 10 mm, der Gesamtdurchmesser, d.h. der doppelte Wert von $x_S$ beträgt ca. 8,8 mm, der Durchmesser $d_1$ des zylindrischen Abschnittes 61 beträgt ca. 5 mm, der Durchmesser $d_2$ der abgerundeten Eindrehung 65 beträgt ca. 5 mm, der Außendurchmesser $d_3$ des Fußes 63 beträgt ca. 6 mm und der Innendurchmesser $d_4$ der Bohrung 66 beträgt ca. 1,8 mm. Die mittlere Höhe $z_F$ des Drehpunktes D über der Unterseite des Fußes 63 beträgt ca. 2 mm. Der Abstand $z_S$ des Schwerpunktes S in der z-Achse vom Drehpunkt D beträgt ca. 3,2 mm. Der Neigungswinkel $\alpha$ der konischen Fläche 64 beträgt ca. 45°, während die abgerundete Eindrehung 65 einen maximalen Neigungswinkel von ca. 10° aufweist.

Der Kippkegel 60 besteht aus Weicheisen. Er kann beispielsweise auf einem Permanentmagneten angeordnet sein, der aus einem Hartferrit mit der Typenbezeichnung HF 8/22 besteht, axial magnetisiert ist und einen Außendurchmesser von 8,8 mm, einen Innendurchmesser von 4 mm und eine Höhe von 2,25 mm aufweist. Mit einem derartigen Haftmagneten sind Flußdichten von 200 mT erzielbar. Wenn die Dicke der Unterlegscheibe 31 im Bereich von 0,5 bis 1,0 mm liegt, ergibt dies Haftkräfte $F_H$ in der Größenordnung von 4 p (0,04 N).

Aus der oben angegebenen Dimensionierung des Kippkegels 60 ergibt sich, daß das Verhältnis von Abrißbeschleunigung $a_A$ zur Kippbeschleunigung $a_K$, entsprechend dem Verhältnis der Koordinaten $z_S/x_S$ nur ca. 0,73 beträgt. Dies bedeutet, daß der Kippkegel 60 vom Permanentmagneten 30 bereits bei einer vertikalen Beschleunigung abhebt, die nur das 0,73-fache des Beschleunigungs-Grenzwertes in der Horizontalebene beträgt.

Um diesen Nachteil zu vermeiden kann der Kippkegel durch Erhöhen der axialen Lage des Schwerpunktes S verbessert werden, wie dies nachstehend anhand der Fig. 5 bis 9 erläutert werden wird.

Fig. 5 zeigt ein erstes Ausführungsbeispiel eines Kippkegels 45, der im wesentlichen mit dem Kippkegel der Fig. 1 bis 3 übereinstimmt.

Man erkennt in Fig. 5 deutlich, daß der Kippkegel 45 über eine untere zylindrische Eindrehung 50 verfügt, die nach unten in eine konische Eindrehung 51 übergeht. Entsprechend ist die Außenseite des Kippkegels 45 nach unten hin mit einer konischen Wand 52 gestaltet, die in eine ebene radiale Oberfläche 53 des Kragens 48 übergeht. Die Unterseite des Kragens 48 im Übergang zum Fuß 49 ist ebenfalls als konische Fläche 54 ausgebildet.

Die konische Fläche 54 kann in der zweiten Arbeitsstellung des Kippkegels 45 (vgl. Fig. 2) einen Schnappeffekt bewirken, wenn der Kippwinkel des Kippkegels 45 gerade so groß wie der Anstellwinkel der konischen Fläche 54 ist. Der Kippkegel 45 liegt dann nämlich in der zweiten Arbeitsstellung gemäß Fig. 2 auf einer Mantellinie der konischen Fläche 54 auf, so daß die Haltekraft in dieser zweiten Arbeitsstellung relativ hoch ist und der Kippkegel 45 dort verrastet wird, bis wieder ein Rückstellmoment auf ihn ausgeübt wird.

Man erkennt aus Fig. 5 deutlich, daß der Kippkegel 45 im unteren Bereich im wesentlichen hohl ausgebildet ist, so daß sein Schwerpunkt S deutlich höher liegt als dies beim Kippkegel 60 der Fig. 4 der Fall ist. In der Praxis hat sich ergeben, daß die Erstreckung der zylindrischen Eindrehung 50 nach oben in Richtung der z-Achse zu einer maximalen Höhe des Schwerpunktes S etwa dann führt, wenn der Schwerpunkt S sich etwa am oberen Ende der zylindrischen Eindrehung 50 befindet. Verlängert man die zylindrische Eindrehung 50 noch weiter nach oben, so wandert der Schwerpunkt S wieder nach unten, weil dann die Masseanteile des Fußes des Kippkegels 45 wiederum stärker ins Gewicht fallen als die verbleibende Masse im Bereich des Kopfes 46, wenn die Bauhöhe h endlich ist.

Für das Ausführungsbeispiel der Fig. 5 ergibt sich ein Beschleunigungsquotient von beispielsweise 1,13, wobei der Vergleichbarkeit halber in den Fig. 5 bis 9 derselbe Maßstab wie in Fig. 4 gewählt wurde und auch die Größen h, $x_S$, $d_1$ und $d_4$ als konstant angenommen wurden.

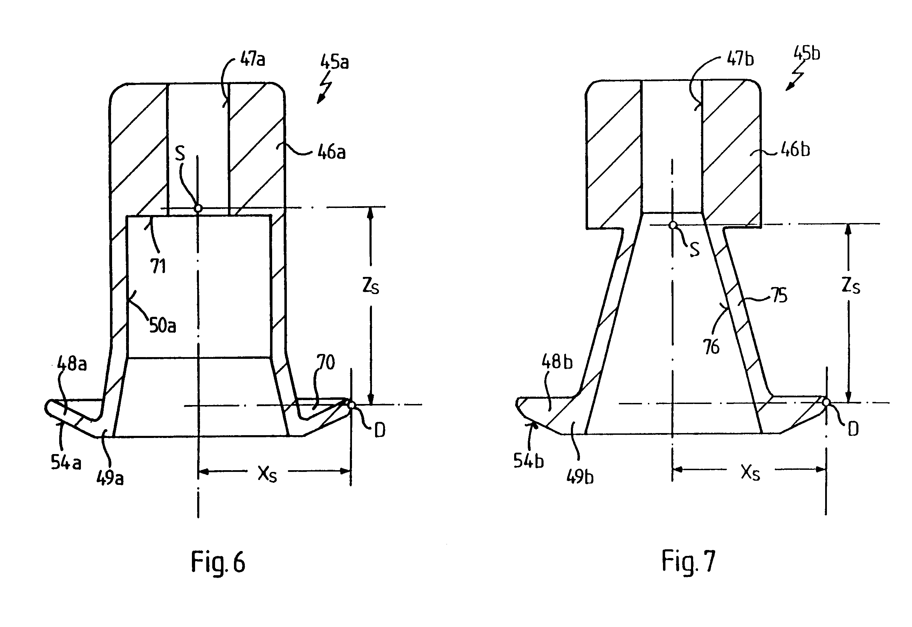

Bei der Variante der Fig. 6 entspricht die Ausbildung des Kippkegels 45a derjenigen des Kippkegels 45, mit der Abweichung, daß statt einer ebenen Oberfläche 53 im Bereich des Kragens 48 nunmehr eine Aushöhlung 70 im Bereich des Kragens 48a vorgesehen ist, um den Masseanteil im Fußbereich des Kegels 45a zu vermindern. Bei im übrigen unveränderten Dimensionen führt dies zu einer Erhöhung der Position des Schwerpunktes S, was wiederum zu einer Erhöhung des Beschleunigungsquotienten auf einen Wert von ca. 1,22 führt.

Bei der Variante der Fig. 7 ist der Kippkegel 45b unterhalb des Schwerpunktes S radial eingeschnürt und er weist dort eine konische Bauweise auf, um wiederum in einen Kragen 48b bzw. Fuß 49b überzugehen, der den entsprechenden Elementen der Fig. 5 entspricht. Diese Bauweise mit konischem Abschnitt 75 und konischer Eindrehung 76 gemäß Fig. 7 führt zu einem Beschleunigungsquotienten von ca. 1,13.

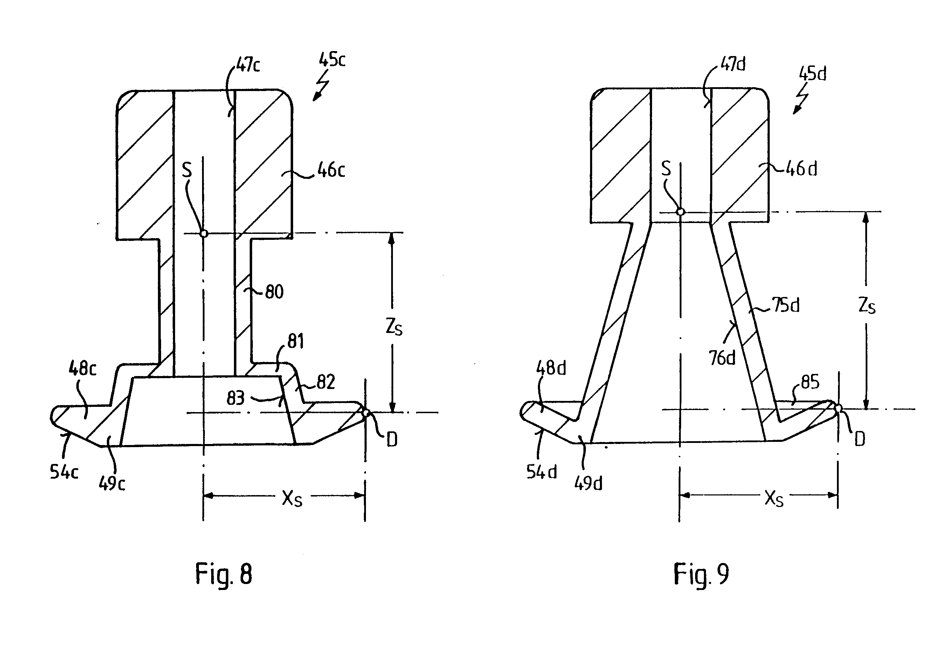

Beim Ausführungsbeispiel der Fig. 8 ist der Kippkegel 45c unterhalb des Schwerpunktes S wiederum axial eingeschnürt, in diesem Falle jedoch mit einem zylindrischen Abschnitt 80 geringen Durchmessers, der nach unten zunächst in eine radiale Verbreiterung 81 und dann einen kegeligen Abschnitt 82 übergeht. Die Eindrehung 83 hat die Form eines Kugelstumpfes.

Bei dieser Ausführungsform ergibt sich ein Beschleunigungsquotient von ca. 1,16.

Schließlich zeigt Fig. 9 noch eine Variante eines Kippkegels 45d, die weitgehend der Variante gemäß Fig. 7 entspricht. Lediglich im Bereich des Kragens 48d ist wiederum eine Aushöhlung 85 vorgesehen, um den Masseanteil im Fußbereich des Kippkegels 45d zu vermindern.

Beim Ausführungsbeispiel der Fig. 9 ergibt sich beispielsweise ein Beschleunigungsquotient von 1,26.

Im Ergebnis bedeutet dies, daß bei einem für die Praxis der passiven Insassen-Sicherungssysteme gewünschten horizontalen Beschleunigungs-Grenzwert von beispielsweise 4 g die Abrißbeschleunigung $a_A$ der erfindungsgemäßen Beschleunigungssensoren mit Kippkegeln gemäß den Fig. 5 bis 9 ca. 5 g betragen kann, während eine Ausführungsform eines Kippkegels gemäß Fig. 4 nur zu einer Abrißbeschleunigung $a_A$ von 3 g führt. Diese Steigerung der Abrißbeschleunigung $a_A$ von 3 g auf 5 g stellt jedoch eine wesentliche Verbesserung der Leistungsdaten des erfindungsgemäßen Beschleunigungssensors 10 dar.

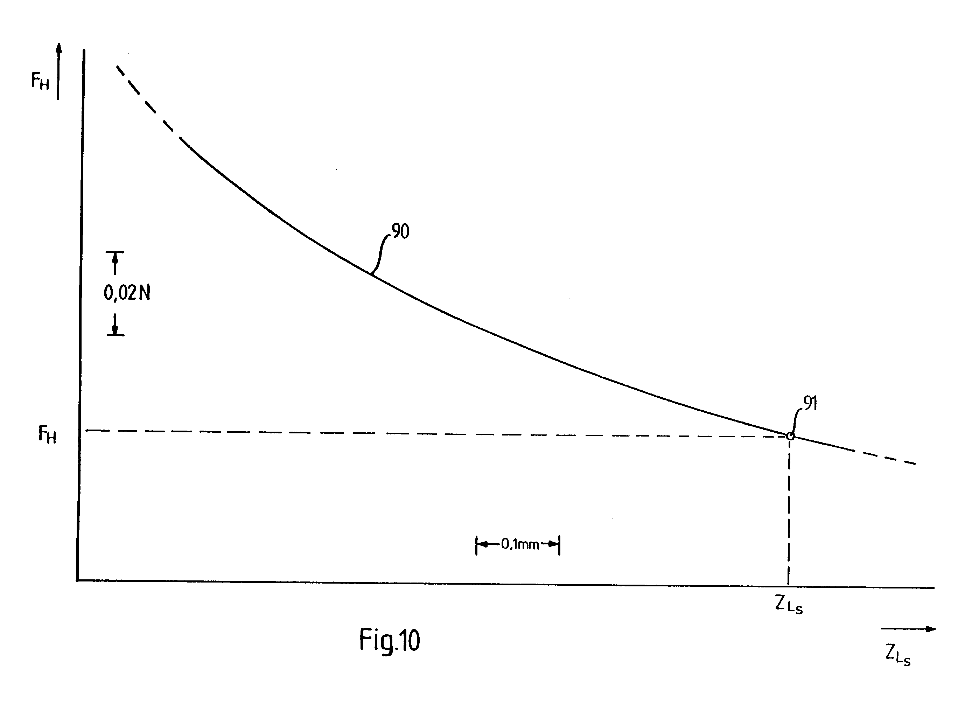

Schließlich zeigt Fig. 10 noch die Abhängigkeit der Haftkraft $F_H$ über der Luftspaltbreite $z_{LS}$, wie sie durch die Unterlegscheibe 31 realisiert wird.

Der Verlauf 90 hat den bekannten hyperbolischen Verlauf, wobei die Haftkraft $F_H$ mit zunehmender Luftspaltbreite $z_{LS}$ abnimmt.

Bei der in Fig. 10 angegebenen Parametrierung der Achsen kann ein Arbeitspunkt 91 im flachen Abschnitt des Verlaufes 90 gewählt werden, bei dem die Abhängigkeit der Haftkraft $F_H$ von Variationen der Luftspaltbreite $z_{LS}$ unkritisch ist. So kann z.B. eine Luftspaltbreite $z_{LS}$ von 0,8 bis 0,9 mm eingestellt werden, um zu einer Haftkraft $F_H$ zwischen 3 und 4 p (0,03 bis 0,04 N) zu kommen. Diese Werte beziehen sich auf das oben angegebene Beispiel eines hartferritischen Ringmagneten mit einer unmagnetischen Unterlegscheibe und einem Kippkegel aus Weicheisen.

**Patentansprüche**

1. Beschleunigungssensor (10) mit einem Lichtsender (21) und einem Lichtempfänger (37), die auf einer optischen Achse (z) einander zu weisend angeordnet sind, mit einem zur Achse (z) rotationssymmetrischen Kippteil (45; 60), das in einer ersten Arbeitsstellung koaxial zur Achse (z) angeordnet ist und eine zur Achse (z) koaxiale Durchgangsbohrung (47; 66) aufweist, so daß ein Lichtstrahl (26) vom Lichtsender (21) durch die Durchgangsbohrung (47; 66) zum Lichtempfänger (37) gelangt, mit Haltemitteln (30, 31) zum Festhalten des Kippteiles (45; 60) in der ersten Arbeitsstellung mit einer vorgegebenen Kraft ($F_H$) in Richtung der Achse (z) auf einer Aufstandsfläche (A), und mit Führungsmitteln (27, 29, 31, 46, 48, 49), die bei einer auf das Kippteil (45; 60) einwirkenden Beschleunigung ($a_K$) in einer Richtung (x, y) senkrecht zur Achse (z) unter Überwindung der vorgegebenen Kraft ($F_H$) eine begrenzte Kippbewegung (55) des Kippteiles (45; 60) um einen im Abstand ($x_S$) von der Achse angeordneten Drehpunkt (D) in eine zweite Arbeitsstellung ermöglichen, derart, daß die Durchgangsbohrung (47; 66) aus der Bahn des Lichtstrahles (26) weg gekippt wird, wobei das Kippteil (45) in seiner räumlichen Masseverteilung derart ausgebildet und damit sein Schwerpunkt (S) relativ zum Drehpunkt (D) derart positioniert ist, daß das Verhältnis der zum Abheben des Kippteiles (45) in Richtung der Achse (z) erforderlichen Abrißbeschleunigung ($a_A$) zu der zum Kippen des Kippteiles (45) um den Drehpunkt (D) erforderlichen Kippbeschleunigung ($a_K$) größer als eins ist, und wobei das Kippteil (45; 60) mit einem radial vorspringenden Kragen (48) versehen ist, dessen umlaufender Rand der Ort des Drehpunktes (D) ist, dadurch gekennzeichnet, daß der umlaufende Rand des radial vorspringenden Kragens (48) einen vertikalen Abstand ($z_F$) von der Aufstandsfläche (A) hat und daß das Kippteil (45; 60) aus einem ferromagnetischen Material besteht und die Haltemittel einen Magneten (30) mit axialer Magnetisierung aufweisen, auf dem das Kippteil (45; 60) in der ersten Arbeitsstellung aufsitzt.

2. Beschleunigungssensor nach Anspruch 1, dadurch gekennzeichnet, daß das Kippteil (45; 60) mit einem näherungsweise zylindrischen Kopf (46; 61) versehen ist, der unten in den radial vorspringenden Kragen (48) übergeht, und daß der Kopf (46b; 46c; 46d) unterhalb des Schwerpunktes (S) verjüngt (75; 80) ausgebildet ist.

3. Beschleunigungssensor nach Anspruch 1 oder 2, dadurch gekennzeichnet, daß der Kragen (48a; 48d) mit einer umlaufenden Aushöhlung (70; 85) versehen ist.

4. Beschleunigungssensor nach einem oder mehreren der Ansprüche 1 bis 3, dadurch gekennzeichnet, daß zwischen Kippteil (45) und Magnet (30) eine unmagnetische Unterlegscheibe (31) vorgegebener Dicke angeordnet ist.

**Claims**

1. An acceleration sensor (10) comprising a light transmitter (21) and a light receiver (37) arranged opposite and facing each other along an optical axis (z); a tilting element (45; 60) of axially symmetrical design with respect to said axis (z), which tilting element is arranged coaxially to the axis (z) in a first operating position, and provided with a passage opening (47; 66) extending coaxially to the axis (z) so that a light beam (26) emitted by the light transmitter (21) passes through the passage opening (47; 66) to the light receiver (37); holding means (30, 31) for holding said tilting element (45; 60) in the first operating position in contact with a support surface (A) by exerting in alignment with the axis (z) a predetermined force ($F_H$) upon the tilting element; and, further, guide means (27, 29, 31, 46, 48, 49) which when an acceleration ($a_K$) acts upon the tilting element (45; 60), in a direction (x, y) perpendicular to the axis (z), permit the tilting element (45; 60) to perform a limited tilting movement (55) against the action of the predetermined force $(F_H)$, about a center of rotation (D) arranged at a distance $(x_S)$ from the axis, into a second operation position, such that the passage opening (47; 60) tilts out of the path of the light beam (26), the three-dimensional mass distribution of the tilting element (45) being such and, accordingly, the position of its center of gravity (S) relative to the center of rotation (D) being such positioned that the ratio of the breakaway acceleration $(a_A)$ required for causing the tilting element (45) to be lifted off in the direction of the axis (z) and the tilting acceleration $(a_K)$ required for causing the tilting element (45) to tilt about the center of rotation (D) is greater than one, whereby the tilting element (45; 60) is provided with a radially projecting collar (48) whose peripheral edge constitutes the location of the center of rotation (D), characterized in that the peripheral edge of the radially projecting collar (48) is vertically spaced by a distance $(z_F)$ from the support surface (A) and that the tilting element (45; 60) consists of a ferromagnetic material and that the holding means comprise a magnet (30) with axial magnetization, on which magnet the tilting element (45; 60) is supported in its first operating position.

2. The acceleration sensor according to claim 1, characterized in that the tilting element (45; 60) is provided with an approximately cylindrical head (46; 61) which is followed in downward direction by the radially projecting collar (48), and that the head (46b, 46c, 46d) is given a tapering design (75; 80) below the center of gravity (S).

3. The acceleration sensor according to claim 1 or claim 2, characterized in that the collar (48a, 48b) is provided with a hollow portion (70; 85) extending all around its circumference.

4. The acceleration sensor according to any one or more of claims 1 through 3, characterized in that a non-magnetic washer (31) of a predetermined thickness is arranged between the tilting element (45) and the magnet (30).

**Revendications**

1. Capteur d'accélération (10) avec un photoémetteur (21) et un photo-récepteur (37), disposés en étant tournés l'un vers l'autre sur un axe optique (z) avec une partie basculante (45;

60), symétrique en rotation par rapport à l'axe (z), disposée, dans une première position de travail, coaxialement par rapport à l'axe (z) et présentant un alésage traversant (47; 66) coaxial par rapport à l'axe (z), de sorte qu'un rayon lumineux (26) partant du photo-émetteur (21) et passant par l'alésage traversant (47; 66) arrive au photorécepteur (37), avec des moyens de maintien (30, 31) pour fixer la partie basculante (45; 60) dans la première position de travail, avec une force prédéterminée $(F_H)$ en direction de l'axe (z), sur une surface de contact (A) et avec des moyens de guidage (27, 29, 31, 46, 48, 49), qui, en cas d'une accélération $(a_K)$ agissant sur la partie basculante (45; 60) et orientée dans une direction (x, y) perpendiculaire à l'axe (z), permettent, en surmontant la force $(F_H)$ prédéterminée, un mouvement de basculement (55) limité de la partie basculante (45; 60), autour d'un centre de rotation (D) disposé à distance $(x_S)$ de l'axe, pour passer dans une deuxième position de travail, de telle façon que l'alésage traversant (47; 66) soit basculé à l'écart de la trajectoire du rayon lumineux (26), la partie basculante (45) étant réalisée de telle façon, concernant la distribution spatiale de sa masse, et avec son centre de gravité (S) placé de telle façon par rapport au centre de rotation (D), que le rapport entre l'accélération d'arrachement $(a_A)$ nécessaire au soulèvement de la partie basculante (45) en direction de l'axe (z) et l'accélération de basculement $(a_K)$ nécessaire au basculement de la partie basculante (45) autour du centre de rotation (D) est supérieure à un, et où la partie basculante (45; 60) est pourvue d'une collerette (48) faisant saillie radialement, dont le bord circulaire est le lieu du centre de rotation (D), caractérisé en ce que le bord circulaire de la collerette (48) faisant saillie radialement est situé à une distance verticale $(z_F)$ par rapport à la surface de pose (A) et que la partie basculante (45; 60) est composée d'un matériau ferromagnétique, et les moyens de maintien présentant un aimant (30) avec une magnétisation axiale, sur lequel la partie basculante (45, 60) repose, lorsqu'elle est dans la première position travail.

2. Capteur d'accélération selon la revendication 1, caractérisé en ce que la partie basculante (45; 60) est pourvue d'une tête (46, 61) à peu près cylindrique, se transformant en partie inférieure en la collerette (48) faisant saillie radialement et en ce que la tête (46b; 46c; 46d) est réalisée en allant en s'effilant (75; 80) au-dessous du centre de gravité (S).

3. Capteur d'accélération selon la revendication 1 ou 2, caractérisé en ce que la collerette (48a; 48d) est pourvue d'une échancrure circulaire (70; 85).

4. Capteur d'accélération selon l'une ou plusieurs des revendications 1 à 3, caractérisé en ce qu'une rondelle intercalaire (31) d'épaisseur prédéterminée, non magnétique, est disposée entre la partie basculante (45) et l'aimant (30).

Fig.1

Fig.2

Fig. 3

Fig.4

Fig.5

EP 0 345 722 B1

Fig. 7

Fig. 6

Fig. 8

Fig. 9

Fig.10